**Europäisches Patentamt**

**European Patent Office**

**Office européen des brevets**

(19)

(11) Publication number: **0 125 069**
**B1**

# (12) EUROPEAN PATENT SPECIFICATION

(45) Date of publication of patent specification: **29.06.88**

(21) Application number: **84302800.2**

(22) Date of filing: **26.04.84**

(51) Int. Cl.⁴: **G 01 N 27/56**

(54) **Electrochemical element and device including the element.**

(30) Priority: **26.04.83 JP 72155/83**

(43) Date of publication of application:
**14.11.84 Bulletin 84/46**

(45) Publication of the grant of the patent:
**29.06.88 Bulletin 88/26**

(84) Designated Contracting States:
**DE FR GB**

(56) References cited:
**EP-A-0 030 164**
**EP-A-0 068 321**
**EP-A-0 105 993**
**DE-A-2 746 381**
**DE-A-3 120 159**
**GB-A-2 054 868**

(73) Proprietor: **NGK INSULATORS, LTD.**
**2-56, Suda-cho, Mizuho-ku**
**Nagoya-shi, Aichi 467 (JP)**

(72) Inventor: **Mase, Syunzo**
**435 Aza-Motokinogo Ohaza-Tobishima-shinden**
**Tobishima-Mura Ama-gun Aichi Pref. (JP)**
Inventor: **Soejima, Shigeo**
**25-70 Aza-Jiami Ohaza-Inokoshi Idaka-Cho**
**Meito-Ku Nagoya City (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to an electrochemical element, and to an electrochemical device including such an element.

An electrochemical device for detecting or controlling oxygen is known which has an oxygen concentration cell in which both surfaces of a solid electrolyte, for example zirconia ceramics which is an oxygen-ion-conductive solid electrolyte, are provided with electrodes made of for example platinum. Electrochemical devices such as detectors and pumps for hydrogen, nitrogen, carbon dioxide gas, sodium and the like similarly using the principle of the concentration cell are also known. To achieve satisfactory operation of these detectors and pumps in a low temperature gas atmosphere, a variety of measures have been proposed.

For example US—A—4,334,974 shows a heater adhered on one side surface of a planar oxygen concentration cell through an insulating layer. The cell is heated by means of said heater. However, this device has the shortcoming that it cannot avoid errors in the output voltage due to the lowering of the insulating resistance of the insulating layer at a high temperature, and its durability is poor.

Japanese patent application No. 177048/57 published under laid-open no. 65758/59 describes a device which corresponds to the first part of the present claims 1 and 5 and which has the drawbacks that, owing to voltage applied to the heater, a leakage current flows into an electrode at a side of high impedance of an oxygen concentration cell across a semiconductive solid electrolyte to vary the electric potential of said electrode or flows into an electrode of an oxygen pump to vary the electric potential of the electrode.

An object of the present invention is to provide an electrochemical element and an electrochemical device having excellent low temperature performance characteristics and high precision and durability. The present invention can avoid some drawbacks present in the electrochemical device to the above mentioned Japanese application.

The present invention is set out in claims 1 and 5. Preferable optional features are described in the dependent claims.

Leakage currents are very effectively prevented or minimized in the present invention by embedding an electron conductor between the heater provided in the semiconductive solid electrolyte and the electrode and preferably grounding said electron conductor.

Embodiments of the invention, will now be described by way of example with reference to the accompanying drawings, in which:—

Fig. 1 is a schematic sectional view of an oxygen concentration detector which is an embodiment of the present invention;

Fig. 2 is an exploded perspective view of a portion of the detector of Fig. 1 showing its mechanical construction and electrical connections;

Fig. 3 is a cross-sectional view along line A—A' in Fig. 2.

Fig. 4 is a cross-sectional view of a portion of another electrochemical element embodying the present invention;

Figs. 5, 7, 8 and 9 are schematic exploded views showing the construction of portions of various different electrochemical elements embodying the present invention, and the electrical connections thereof; and

Fig. 6 is a cross-sectional view along line B—B' in Fig. 5.

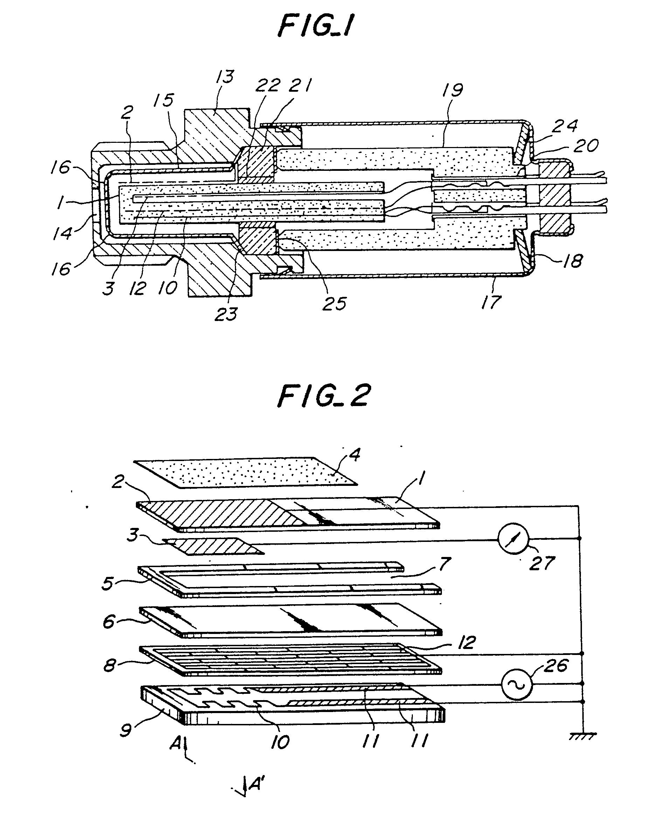

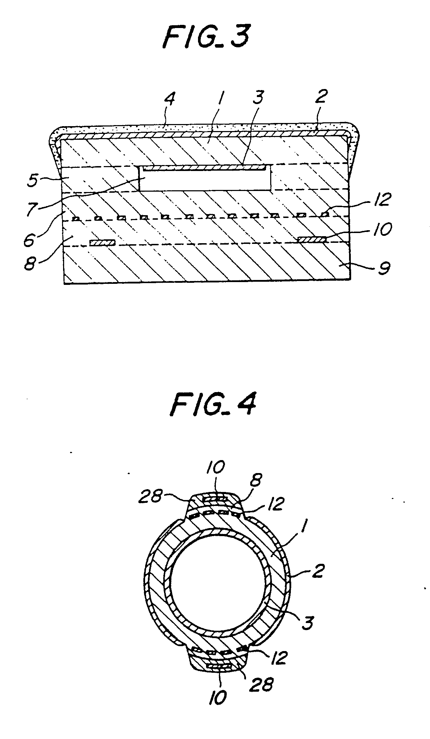

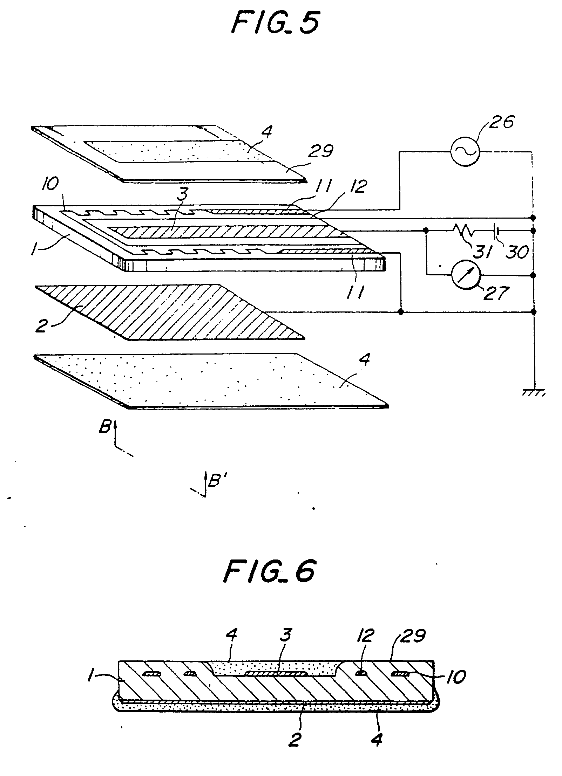

Figs. 1, 2 and 3 show an oxygen concentration detector having electrodes 2 and 3 of porous platinum in tight contact with opposite side surfaces of a solid electrolyte layer 1 formed of zirconia ceramics containing yttria to form an electrochemical cell which acts as an oxygen concentration cell. The electrode 2 is exposed to a gas to be measured through a spinel porous layer 4 formed by a plasma flame spray process and the electrode 3 is exposed to a cavity region 7 surrounded by solid electrolytes 5 and 6 made of the same material as the layer 1. A heater 10 and terminals 11, which are composed of a mixture of 80% by weight of platinum, 10% by weight of rhodium and 10% by weight of zirconia powder, are gastightly embedded between solid electrolyte layers 8 and 9 made of the same material as the layer 1. A lattice-shaped electron conductor 12 composed of 95% by weight of platinum and 5% by weight of zirconia powder is gastightly embedded between the layer 6 and the layer 8.

A gas to be measured reaches the surface of the electrode 2 through an opening 14 in a housing 13 shown in Fig. 1 and openings 16 in a heat-conserving cover 15. Air acting as a reference gas reaches the reference electrode 3 through a venthole 18 of a cap 17 and a hole 20 in an insulator 19 made of alumina ceramics.

The gas to be measured and the air are gastightly separated by glass 22 filled between a supporting flange 21 and the solid electrolytes 1, 5, 6, 8 and 9 and by a sealing portion 23 of the cover 15. To ensure gas-tightness at the sealing portion 23, a spring 24 secured to the inside surface of the cap 17 urges the insulator 19 and the flange 21 against the sealing portion 23 which is held against an inside surface of the housing 13. A metallic washer 25 is inserted between the insulator 19 and the flange 21.

When an alternating current power source 26 is connected to the heater 10 through the terminals 11, the heater 10 emits heat through the Joule effect of the electric current flowing through it, layers 1, 5, 6, 8 and 9 in tight contact with the heater are heated. As the temperature of these layers 1, 5, 6, 8 and 9 is raised, they show oxygen ion conductivity. Then a part of the AC current applied to the heater 10 flows into the layers 1, 5, 6, 8 and 9.

However, the two side surfaces of the electron conductor 12 are in electroconductively tight contact with respectively the layers 6 and 8 to form a closed circuit with the heater 10, so that the major part of the current flowing into the solid electrolyte layers from the heater 10 flows into the electron conductor 12. The electric potential of the solid electrolyte near the conductor 12 becomes substantially equal to that of the electron conductor 12. If the electric potential of the conductor 12 is maintained at a given value, the leakage current from the heater 10 to the solid electrolyte layers does not influence the performance of the electrochemical cell.

It is desirable that the electric resistivity of the electron conductor in the heated state is smaller than that of the solid electrolyte. Metals, such as nickel, silver, gold, platinum, rhodium, palladium, iridium, ruthenium, tungsten, molybdenum etc. or alloys thereof are preferred in view of their high durability, but compounds such as $ZnO$, $LaCrO_3$, $LaB_6$, SiC etc. may be used. The electron conductor may be embedded in the solid electrolyte by the following processes. A metal powder paste which is to form the electron conductor is screen printed on a green mass of the solid electrolyte and then a further green mass of the solid electrolyte is pressed thereon to form a laminate. Alternatively, an electron conductor is applied on a surface of the sintered solid electrolyte by a known process used when an electrode is provided on a ceramics, such as vacuum evaporation, sputtering, paste baking, flame spraying and the like. Then the solid electrolyte layers, heater, electrodes and the like are formed thereon by screen printing and sintering, sputtering or the like.

Since the electron conductor 12 is embedded in the solid electrolyte, it is not evaporated during use nor stained by the components in the gas to be measured. If both sides of the electron conductor 12 are surrounded by the same material, stress due to differences, of the thermal expansion is not caused, and, for example, even if the electrochemical element is used for a long time in a broad temperature range from about 200°C to 1,000°C, no removal of the electron conductor occurs. The shape of the electron conductor may be a planar sheet but in order to increase the adhesion between the solid electrolyte layers, it is desirable if it has a lattice-shape or is a sheet with small perforations and solid electrolyte is filled into its gaps or perforations. The leakage current from the heater may be satisfactory removed by forming the electron conductor with two or more layers.

In order to prevent the electron conductor from stripping off, rupturing or the like due to sintering during operation of the oxygen concentration cell and to decrease the impedance at the interface between the electron conductor and the solid electrolyte, it is desirable to mix a fine powder of zirconia, yttria, alumina or the like into the electron conductor. The electric current applied to the heater 12 may be AC, DC or pulse current. By monitoring the variation of the impedance between the heater 10 and the electron conductor 12 due to the variation of temperature of the solid electrolyte 8, the temperature of the electrochemical element can be accurately measured with high response to the temperature variation by measuring the electric current flowing in the electron conductor 12.

The solid electrolytes useful in the present invention include β-alumina, aluminum nitride, NASICON, $SrCeO_3$, $Bi_2O_3$-rare earth oxide solid solutions, $La_{1-x}Ca_xYO_{3-x}$ etc. as well as zirconia ceramics. The electrochemical cell of the present invention is not limited to a concentration cell but may be for example an electrochemical pump, or an electrolytic cell in diffusion limit current process.

The cell shape may be circular as shown in Fig. 4 rather than have a planar form as in Fig. 1. In Fig. 4, the electrodes 2 and 3 are provided at an inner surface and an outer surface respectively of a cylindrical solid electrolyte layer 1. An electron conductor 12 is provided at each of two regions between the layer 1 and a solid electrolyte layer 8 which is of the same or similar material as the layer 1. A heater 10 and a high resistance ceramic layer 28 are provided on the layer 8. The heater may contact with the layer 8 directly or through the high resistance ceramic layer.

The following examples are given for the purpose of illustration of this invention and are not intended as limitative thereof.

Example 1

A mixture obtained by adding to 100 parts by weight of powder consisting of 97 mol % of $ZrO_2$ and 3 mol % of $Y_2O_3$, 1 part by weight of alumina as a sintering aid, 8 parts by weight of polyvinyl butyral and 4 parts by weight of dioctyl phthalate as a molding aid, was shaped into a planar body having a thickness of 1 mm. This planar body 1 is shown in Figs. 5 and 6.

On one side surface of this planar body 1, a heater 10, terminals 11 for applying voltage thereto and an electron conductor 12 were printed using a mixture of 90 parts by weight of platinum powder and 10 parts by weight of alumina powder by means of a screen printing process, as shown in Fig. 5 and Fig. 6. A solid electrolyte layer 29 of the same composition as the body 1 was screen-printed on the printed surface of the body to cover the whole heater 10 and the major part of the terminals 11 and this assembly was sintered in air at 1,400°C. Then, electrodes 2 and 3 of platinum were applied to the layer 1 as shown in Fig. 5 by a high frequency sputtering process. The exposed surfaces of the electrodes 2 and 3 were covered with porous layers 4 of spinel by a plasma flame spraying process. An oxygen concentration detector was thus formed.

An AC sine wave power source of frequency 60 Hz and voltage 2 V was connected to the two terminals 11 of the heater 10 of this detector and an alternating current was passed. One minute after the start of flow of the current, the temperature of the solid electrolyte layer 1 reached 400°C. In order to establize the electric potential at the reference electrode of the electrode 3, a polarized electric current was passed from a DC power source 30 through a resistor 31 to polarize the electrode 3 positive with respect to the electrode 2. This oxygen concentration detector was *inserted into an exhaust gas at 200°C discharged* from an automobile engine and the electromotive force between the electrode 2 and the electrode 3 corresponding to the concentration of the component causing the electrode reaction in the gas, that is oxygen in the exhaust gas, was measured by a potentiometer 27. Outputs of 750 mV in an atmosphere of $\lambda=0.95$ and 65 mV in an atmosphere of $\lambda=1.05$ were obtained. The amplitude of the noise voltage in the output voltage was 50 mV and was about 1/10 of that obtained in the case where there was no electron conductor 12. After continuous use in the same exhaust gas for 800 hours, no deterioration of the detector of the invention was found.

Example 2

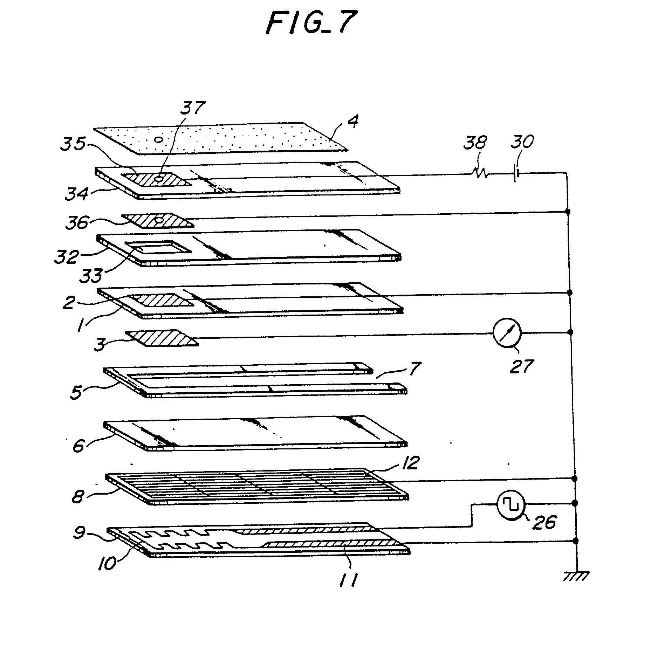

Zirconia raw batch material obtained by adding to 100 parts by weight of powder consisting of 92 mol % of $ZrO_2$ and 8 mol % of $Yb_2O_3$, 0.5 part by weight of clay as a sintering aid, 12 parts by weight of polyvinyl butyral and 6 parts by weight of dioctyl phthalate as a molding aid, was shaped into a planar body having a thickness of 1 mm. This is shown as body 9 in Fig. 7. A paste containing 90 parts by weight of platinum powder consisting of 80% by weight of platinum and 20% by weight of rhodium, and 10 parts by weight of alumina powder was screen printed on one surface of the body 9 shown in Fig. 7 to form a heater 10 and terminal portions 11. A solid electrolyte layer 8 having the same composition as the above described zirconia raw batch material and a thickness of 0.3 mm was laid thereon and a paste containing 95% by weight of platinum and 5% by weight of zirconia powder was screen printed thereon in a lattice-form to form an electron conductor 12. A solid electrolyte layer 6 and a solid electrolyte layer 5 provided with a cavity region 7, which have the same composition as the above described zirconia raw batch material and a thickness of 0.3 mm, were laid thereon.

Then, a solid electrolyte layer 1 having the same composition as the above described zirconia raw batch material and a thickness of 0.3 mm, to which electrodes 2 and 3 had been applied by screen printing a paste containing 90% by weight of platinum powder and 10% by weight of zirconia powder, was applied. A further solid electrolyte layer 32 having the same composition as the above described zirconia raw batch material and a thickness of 0.3 mm and having an aperture forming a cavity region 33 was applied. Then a solid electrolyte layer 34 having the same composition as the above described zirconia raw batch material and a thickness of 0.3 mm, wherein pump electrodes 35 and 36 and a gas diffusing hole 37 having a diameter of 0.3 mm had been provided, was laid on the solid electrolyte layer 32. The assembly thus formed was sintered in air at 1,450°C to produce an oxygen concentration detector.

An alternating current of a rectangular wave having a frequency of 200 Hz and a voltage of 7 V was applied to the two terminal portions 11 of this *detector, 20 seconds after start of application of* the current, the temperature at the top end of the element was raised to 730°C and the AC current passing was 0.5 A. This current value was very sharply and rapidly varied with respect to the variation of the outer environment temperature.

This oxygen concentration detector was inserted into a gas at 50°C consisting of 95% of $N_2$ and 5% of $O_2$, a DC current was applied between the pump electrode 35 and the pump electrode 36 facing the gas diffusing hole 37 by a DC power source 30 and a resistor 38. When oxygen in the cavity region 33 was completely transferred to the electrode 35, the oxygen concentration in the cavity region 33 becomes substantially zero and the electric potential between the electrode 2 and the electrode 3 was rapidly varied, the value of this DC current was determined. Its value in this case was 4 mA. The amplitude of noise voltage applied to both the ends of a potentiometer 27 was 20 mV and was about 1/100 of that obtained in the case where there was no electron conductor 12. This device could be satisfactorily used as an oxygen concentration detector used together with an oxygen pump.

Example 3

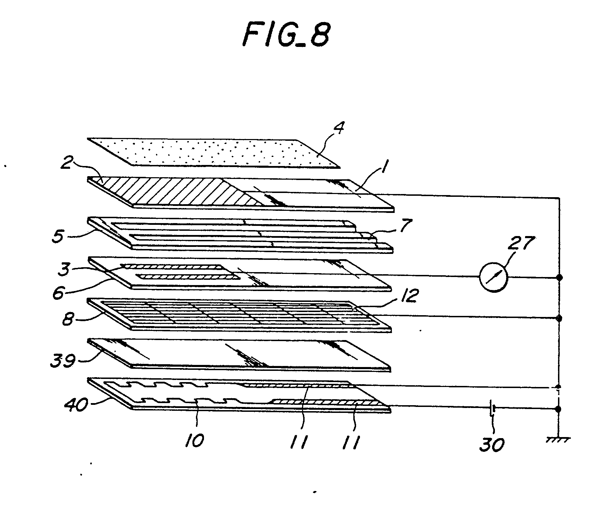

A mixture of 100 parts by weight of a powder consisting of 96 mol % of $ZrO_2$ and 4 mol % of $Y_2O_3$, 0.2 parts by weight of alumina as a sintering aid and 8 parts by weight of methyl polyacrylate and 4 parts by weight of dioctyl phthalate as a molding aid was shaped into a planar solid electrolyte layer 1 having a thickness of 1 mm shown in Fig. 8.

On one surface of this solid electrolyte layer 1, an electrode 2 was formed by screen printing using a paste obtained by mixing a mixture of 85 parts by weight of platinum powder and 15 parts by weight of zirconia powder with 4 parts by weight of ethyl cellulose and 50 parts by weight of n-butyl carbitol acetate. On the other surface of the layer 1, a solid electrolyte layer 5 having the same composition as the layer 1 and provided with a plurality of cavity regions 7 was applied and then a solid electrolyte layer 6 screen-printed with an electrode 3 having the same composition as the electrode 2 was laid thereon. The layers 1 and 5 become an integral solid electrolyte layer after firing.

The next layer is a solid electrolyte layer 8 having the same composition as the layer 1 and to which an electron conductor 12 consisting of 95 parts by weight of platinum powder and 5 parts by weight of zirconia powder was applied by screen-printing, on the surface next to the layer 6. A high resistance ceramic layer 39 consisting of 90% by weight of alumina, 2% by weight of $B_2O_3$, 5% by weight of $SiO_2$, 2% by weight of $CaO_2$ and 1% by weight of MgO, a screen-printed heater 10 consisting of 90% by weight of platinum powder and 10% by weight of alumina powder, terminal portions 11 and a high resistance ceramic layer 40 having the same composition as that of the layer 39 were in turn applied. The thus formed assembly was sintered by heating at 1,430°C for 3 hours.

Then, a porous layer 4 composed of spinel was formed on a surface of the electrode 2 by a plasma flame spraying process to complete an oxygen concentration detector.

A power source 30 was connected to the two terminals 11 of the heater 10 of this oxygen concentration detector and a direct current of 14 V was applied. 30 seconds after application of the current, the top end of this element was raised to 800°C. The electric current in this case was 0.5 A. The electric potential difference when the electrode 2 and the electrode 3 of this element were exposed to air, was determined by a potentiometer 27 and the potential difference was 1.5 mV. The influence of the leakage current from the heater was very low by comparison with the value of the potential difference of 80 mV when there was no electron conductor 12. After the electric current was passed on this element in air under the above described conditions for 1,000 hours, no deterioration was found.

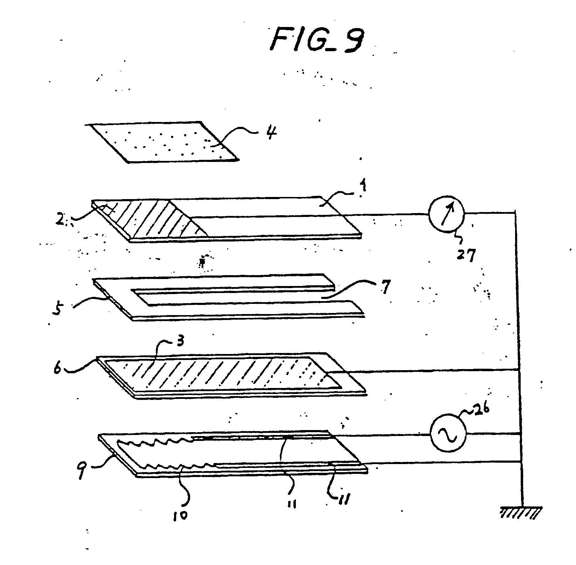

Fig. 9 shows a modification of the embodiment of Fig. 8 (Example 3), which is generally similar in structure and materials to that of Fig. 8, except that the layers 8 and 39 are omitted and the electrode 3 (which here covers almost the whole of the area of the layer 6) acts both as the electrode of the cell (1, 2, 3) and as the electron conductor embedded in · the solid electrolyte material. Thus the electron conductor and one of the porous electrodes are combined in a single layer of conductive material. As Fig. 9 shows, the electrode 3 is connected to earth, and the potentiometer 27 measures the potential of the electrode 2.

These embodiments show that the electrochemical devices and elements of the present invention can be simple in the construction but of high electrical precision. Deterioration of the solid electrolyte due to heating can be substantially avoided. The devices have high durability and can be satisfactorily used as the detector or controller of components involving an electrode reaction in a fluid containing oxygen, nitrogen, carbon dioxide, hydrogen, sodium and the like. Particularly, if said element is used as a detector of oxygen concentration in the exhaust gas discharged from an internal combustion engine, the oxygen concentration can be accurately detected even in the exhaust gas at a low temperature immediately after starting up the engine or at low speed rotation of the engine, which makes the element very useful in pollution control.

## Claims

1. An electrochemical element comprising an electrochemical cell having a solid electrolyte layer (1) and at least one pair of porous electrodes (2, 3) arranged in relation to said solid electrolyte layer (1) to form said electrochemical cell therewith, and a heater (10) which directly contacts said solid electrolyte layer (1) or is thermally connected thereto via a further layer or layers (5, 6, 8, 28, 39) of the element and is separated from the electrodes characterised in that an electron conductor (12) is embedded in solid electrolyte material of the element so as to lie between the electrochemical cell (1, 2, 3) and the heater (10), said solid electrolyte material in which the electron conductor (12) is embedded being constituted by at least one layer selected from the said layer (1) of the cell and the said further layers (5, 6, 8) of the element.

2. An electrochemical element as claimed in claim 1, wherein said solid electrolyte layer (1) is an oxygen ion conductor.

3. An electrochemical element as claimed in claim 1 or claim 2 wherein said electron conductor (12) has a network-shape.

4. An electrochemical element as claimed in claim 1 or claim 2 wherein the said electron conductor (12) and one of the porous electrodes (2, 3) are provided by a single layer of conductive material.

5. An electrochemical device having an electrochemical element comprising an electrochemical cell having a solid electrolyte layer (1) and at least one pair of porous electrodes (2, 3) arranged in relation to said solid electrolyte layer (1) to form said electrochemical cell therewith, and a heater (10) which directly contacts said solid electrolyte layer (1) or is thermally connected thereto via a further layer or layers (5, 6, 8, 28, 39) of the element and is separated from the electrodes characterised in that an electron conductor (12) is embedded in solid electrolyte material of the element so as to lie between the electrochemical cell (1, 2, 3) and the heater (10), said solid electrolyte material in which the electron conductor (12) is embedded being constituted by at least one layer selected from the said layer (1) of the cell and the said further layers (5, 6, 8) of the element and in that the device includes means to connect the electron conductor (12) electronically to the heater so that leakage current in the element between the heater (10) and the electron conductor (12) does not affect the cell performance.

6. An electrochemical device as claimed in claim 5, wherein said solid electrolyte layer (1) is an oxygen ion conductor.

7. An electrochemical device as claimed in claim 5 or claim 6 wherein said electron conductor (12) has a network-shape.

8. An electrochemical device as claimed in claim 5 or claim 6 wherein the electron conductor (12) and one of the porous electrodes (2, 3) are provided by a single layer of conductive material.

## Patentansprüche

1. Elektrochemisches Element mit einer elektrochemischen Zelle, die eine feste Elektrolytschicht (1) und mindestens ein Paar poröse Elektroden (2, 3) aufweist, die im Verhältnis zu der festen Elektrolytschicht (1) so angeordnet sind, daß sie zusammen mit ihr die elektrochemische Zelle bilden, und die eine Heizeinrichtung (10) aufweist, die mit der festen Elektrolytschicht (1) direkt in Kontakt steht oder über eine oder mehrere weitere Schichten (5, 6, 8, 28, 39) des Elements damit thermisch verbunden und von den Elektroden getrennt ist, dadurch gekennzeichnet, daß ein Elektronenleiter (12) in das feste Elektrolytmaterial des Elements so eingebettet ist, daß er zwischen der elektrochemischen Zelle (1, 2, 3) und der Heizeinrichtung (10) liegt, wobei das feste Elektrolytmaterial, in das der Elektronenleiter (12) eingebettet ist, aus mindestens einer Schicht besteht, die ausgewählt wird aus der Schicht (1) der Zelle und den weiteren Schichten (5, 6, 8) des Elements.

2. Elektrochemisches Element nach Anspruch 1, worin die feste Elektrolytschicht (1) ein Sauerstoffionenleiter ist.

3. Elektrochemisches Element nach Anspruch 1 oder 2, worin der Elektronenleiter (12) eine Netzstruktur hat.

4. Elektrochemisches Element nach Anspruch 1 oder 2, worin der Elektronenleiter (12) und eine der porösen Elektroden (2, 3) von einer einzigen Schicht aus dem leitenden Material gebildet werden.

5. Elektrochemische Vorrichtung mit einem elektrochemischen Element, das aufweist eine elektrochemische Zelle mit einer festen Elektrolytschicht (1) und mindestens einem Paar porösen Elektroden (2, 3), die im Verhältnis zu der festen Elektrolytschicht (1) so angeordnet sind, daß sie zusammen damit die elektrochemische Zelle bilden, und einer Heizeinrichtung (10), die mit der festen Elektrolytschicht (1) direkt in Kontakt steht oder über eine oder mehrere weitere Schichten (5, 6, 8, 28, 39) des Elements thermisch damit verbunden und von den Elektroden getrennt ist, dadurch gekennzeichnet, daß ein Elektronenleiter (12) in das feste Elektrolytmaterial des Elements so eingebettet ist, daß er zwischen der elektrochemischen Zelle (1, 2, 3) und der Heizeinrichtung (10) liegt, wobei das feste Elektrolytmaterial, in das der Elektronenleiter (12) eingebettet ist, aus mindestens einer Schicht besteht, die ausgewählt wird aus der Schicht (1) der Zelle und den weiteren Schichten (5, 6, 8) des Elements, und daß die Vorrichtung eine Einrichtung zum elektronischen Verbinden des Elektronenleiters (12) mit der Heizeinrichtung umfaßt, so daß ein Kriechstrom in dem Element zwischen der Heizeinrichtung (10) und dem Elektronenleiter (12) die Leistung der Zelle nicht beeinflußt.

6. Elektrochemische Vorrichtung nach Anspruch 5, worin die feste Elektrolytschicht (1) ein Sauerstoffionenleiter ist.

7. Elektrochemische Vorrichtung nach Anspruch 5 oder 6, worin der Elektronenleiter (12) eine Netzstruktur hat.

8. Elektrochemische Vorrichtung nach Anspruch 5 oder 6, worin der Elektronenleiter (12) und eine der porösen Elektroden (2, 3) durch eine einzige Schicht aus dem leitenden Material gebildet werden.

**Revendications**

1. Elément électrochimique comprenant une cellule électrochimique ayant une couche (1) d'électrolyte solide et au moins une paire d'électrodes poreuses (2, 3) disposées en relation à ladite couche (1) d'électrolyte solide pour former avec elle ladite cellule électrochimique, et un réchauffeur (10) qui est directement en contact avec ladite couche (1) d'électrolyte solide ou qui est relié thermiquement à celle-ci par l'intermédiaire d'une autre ou d'autres couches (5, 6, 8, 28, 39) de l'élément et qui est séparé des électrodes, caractérisé en ce qu'un conducteur d'électrons (12) est inclus dans un matériau électrolyte solide de l'élément, de façon à s'étendre entre la cellule électrochimique (1, 2, 3) et le réchauffeur (10), ledit matériau électrolyte solide dans lequel est inclus le conducteur d'électrons (12) étant constitué par au moins une couche choisie parmi ladite couche (1) de la cellule et les autres couches (5, 6, 8) de l'élément.

2. Elément électrochimique selon la revendication 1, dans lequel ladite couche (1) d'électrolyte solide est un conducteur d'ions oxygène.

3. Elément électrochimique selon la revendication 1 ou la revendication 2, dans lequel ledit conducteur d'électrons (12) a une forme de réseau.

4. Elément électrochimique selon la revendication 1 ou la revendication 2, dans lequel ledit conducteur d'électrons (12) et l'une des électrodes poreuses (2, 3) sont fournis par une couche unique de matériau conducteur.

5. Appareil électrochimique ayant un élément électrochimique comprenant une cellule électrochimique ayant une couche (1) d'électrolyte solide et au moins une paire d'électrodes poreuses (2, 3) disposées en relation à ladite couche (1) d'électrolyte solide pour former avec elle ladite cellule électrochimique, et un réchauffeur (10) qui est en contact directement avec ladite couche (1) d'électrolyte solide ou qui est relié thermiquement avec elle par l'intermédiaire d'un autre ou d'autres couches (5, 6, 8, 28, 39) de l'élément et qui est séparé des électrodes, caractérisé en ce qu'un conducteur d'électrons (12) est inclus dans un matériau électrolyte solide de l'élément de façon à s'étendre entre la cellule électrochimique (1, 2, 3) et le réchauffeur (10), ledit matériau électrolyte solide dans lequel est inclus le conducteur d'électron (12) étant constitué par au moins une couche choisie parmi ladite couche (1) de la cellule et lesdites couches (5, 6, 8) de l'élément et en ce que le dispositif comprend des moyens pour relier électroniquement le conducteur d'électrons (12) au réchauffeur de telle façon que le courant de fuite dans l'élément entre le réchauffeur (10) et le conducteur d'électrons (12) n'affecte pas le fonctionnement de la cellule.

6. Appareil électrochimique selon la revendication 5, dans lequel ladite couche (1) d'électrolyte solide est un conducteur d'ions oxygène.

7. Appareil électrochimique selon la revendication 5 ou la revendication 6, dans lequel ledit conducteur d'électrons (12) a une forme de réseau.

8. Appareil électrochimique selon la revendication 5 ou la revendication 6, dans lequel le conducteur d'électrons (12) et l'une des électrodes poreuses (2, 3) sont fournis par une couche unique de matériau conducteur.

0 125 069

# FIG_1

# FIG_2

1

## FIG. 3

## FIG. 4

# FIG. 5

# FIG. 6

# FIG_7

0 125 069

# FIG_8

5

# FIG_9